# EUROPÄISCHE PATENTSCHRIFT

(11) **EP 0 654 357 B1**
(45) Veröffentlichungstag und Bekanntmachung des Hinweises auf die Patenterteilung: **05.08.1998**
(21) Anmeldenummer: 94250275.8
(22) Anmeldetag: 15.11.1994
(51) Int. Cl.: G01D 11/24, B41J 29/02

(54) **Prozessschreibergehäuse**
Process recorder housing
Boîtier d'enregistreur de procédé

(30) Priorität: 18.11.1993 DE 4339789
(43) Veröffentlichungstag der Anmeldung: 24.05.1995
(73) Patentinhaber: Hartmann & Braun GmbH & Co. KG, 60487 Frankfurt (Main) (DE)
(72) Erfinder: Dräger, Achim, D-65760 Eschborn (DE); Meffert, Rolf, D-64546 Mörfelden (DE); Koehler, Eberhard, D-61381 Friedrichsdorf (DE); Thönebe, Werner, D-30890 Barsinghausen (DE)
(74) Vertreter: Meissner, Peter E., Dipl.-Ing.

(56) Entgegenhaltungen:
- DE-A- 3 831 442
- DE-A- 3 833 967
- FR-A- 2 307 252
- GB-A- 2 009 933
- Werbeprospekt Hartmann & Braun, 50/43-03/93 DE, aus 02.93

## Beschreibung

Die Erfindung betrifft ein Prozeßschreibergehäuse in welchem die Komponenten des Prozeßschreibers angeordnet sind, wobei das Gehäuse über eine Fronttür verschließbar ist, und im Bereich der Fronttür eine Dichtung vorhanden ist, gemäß Oberbegriff des Patentanspruches 1.

Ein Prozeßschreibergehäuse der genannten Art ist aus dem Werbeprospekt der Hartmann & Braun AG (50/43-03/93 DE, aus 02.93) bekannt. Bei solchen Prozeßschreibern bestehen die Gehäuse in der Regel aus Metall. Dies ist durch das hohe Gewicht der einzelnen Schreiberkomponenten aufgrund der notwendigen Statik zu allermeist notwendig. Ferner weisen solche Prozeßschreibergehäuse in der Regel Fronttüren auf, durch welche die einzelnen Komponenten zugänglich sind. Durch die Fronttür hindurch werden Schreibstifte und/oder Papierrollen ausgetauscht und das mitgeschriebene Prozeßprotokoll entnommen.

Um die einzelnen, oftmals mechanisch gegen Verschmutzung sehr empfindlichen Schreiberelemente zu schützen, ist im Bereich der Fronttür bzw. zwischen Fronttür und Gehäuse eine Dichtung vorgesehen, die das Gehäuse nach Schließen der Fronttür quasi hermetisch abschließt. Ferner ergibt sich, daß die Fronttür im geschlossenen Zustand natürlich als tragendes Element zur Statik des ganzen Gehäuses wesentlich beiträgt. Da diese Prozeßschreiber jedoch häufig geöffnet werden, und möglicherweise Schreiberkomponenten entnommen werden, muß die Statik auch bei geöffneter Fronttür nach wie vor erhalten bleiben. Aus all diesen Einzelbetrachtungen ergibt sich dann, daß solche bekannten Prozeßschreibergehäuse nicht aus Kunststoff gefertigt werden können, weil sich daraus bei einer Konstruktion in der bekannten Art eine nur mangelhafte Statik des Gehäuses ergeben würde.

Der Erfindung liegt daher die Rufgabe zugrunde ein Prozeßschreibergehäuse dahingehend auszugestalten, daß es eine höhere Statik aufweist.

Die gestellte Aufgabe wird bei einem Prozeßschreibergehäuse der gattungsgemäßen Art erfindungsgemäß durch die kennzeichnenden Merkmale des Patentanspruches 1 gelöst. Weitere vorteilhafte Ausgestaltungen der Erfindung sind in den abhängigen Ansprüchen angegeben.

Durch die Anordnung eines Versteifungsrahmens am Gehäuse im Bereich der Fronttür, wird eine erhebliche Verbesserung der Statik des Prozeßschreibergehäuses erreicht. Die grundlegende Erkenntnis hierbei besteht darin, daß man bei einem beispielsweise aus Kunststoff gefertigten Gehäuse das Versteifungselement an der "entscheidenden" Stelle anordnet, um damit das Gehäuse selbsttragend und statisch robuster zu machen. Es hat sich durch die Verwendung eines Versteifungsrahmens und die entsprechende erfindungsgemäße ortsmäßige Plazierung des Versteifungsrahmens eine erhebliche Verbesserung der Gehäusestatik ergeben, so daß solche Gehäuse nunmehr aus Kunststoff herstellbar sind, und dennoch die nötige Statik zur Aufnahme der "schwergewichtigen Schreiberkomponenten" aufweisen.

In weiterer vorteilhafter Ausgestaltung der Erfindung, bei der auf das Dichtelement im Bereich der Fronttür natürlich nicht verzichtet werden soll bzw. darf, ist vorgesehen die Dichtung rahmenartig auszubilden und auf den Versteifungsrahmen aufzulegen. In weiterer vorteilhafter Ausgestaltung der Erfindung ist dabei vorgesehen, in den Ecken des Versteifungsrahmens Stifte anzuordnen, und die als Flachdichtung ausgebildete Dichtung an den entsprechenden Stellen mit Öffnungen zu versehen, um diese auf die Fixierstifte aufschieben zu können. Besonders vorteilhaft erweist es sich hierbei, diese Stifte konisch auszubilden, wobei der Konus so angeordnet ist, daß der größte Stiftdurchmesser an der Spitze des Stiftes, und der kleinste Durchmesser des Stiftes direkt am Versteifungsrahmen vorliegt. Hierdurch wird erreicht, daß die Dichtung zunächst unter Aufbringung der nötigen Lochleibungskräfte auf die Stifte aufgedrückt werden muß, anschließend in ihre entsprechende Sollposition rutscht und dort fixiert bleibt. Es ist also verhindert, daß sich die Dichtung beim Öffnen der Tür ungewollt vom Versteifungsrahmen löst. Insgesamt ist die Anordnung konstruktiv einfach aber wirkungsvoll.

Die Erfindung ist in der Zeichnung dargestellt und im nachfolgenden näher beschrieben.

Es zeigt:
- Figur 1: Darstellung des Prozeßschreibergehäuses in Seitenansicht.
- Figur 2: Prozeßschreibergehäuse in Frontansicht mit geöffneter bzw. demontierter Tür.
- Figur 3: Einbaulage des Versteifungsrahmens und der Dichtung an der Gehäusefront.

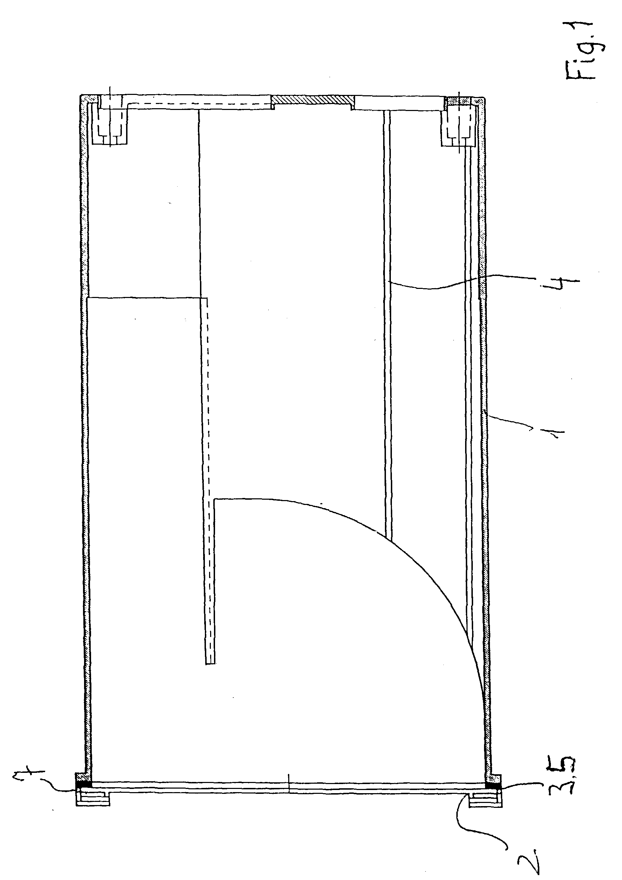

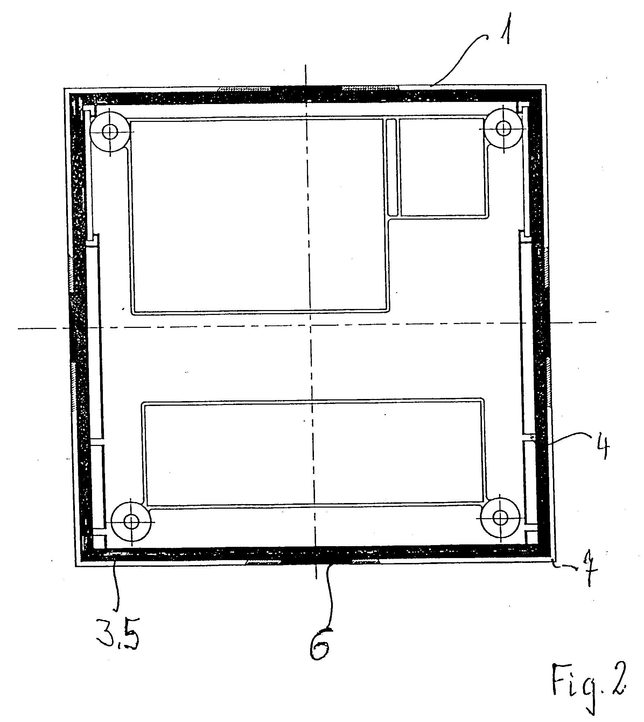

Figur 1 zeigt das Prozeßschreibergehäuse 1 in Seitenansicht. Schematisch dargestellt sind die an den Seitenwänden angeordneten Führungsschienen 4, in denen die einzelnen hier nicht darstellbaren Schreiberkomponenten angeordnet bzw. fixiert sind. Das Gehäuse 1 ist an der Gehäusefront mit der Gehäusetür 2 verschlossen. Zwischen Gehäuse 1 und Gehäusetür 2 ist der Versteifungsrahmen 5 mit der Dichtung 3 eingelegt. Der Versteifungsrahmen selbst ist an der offenen Seite des Gehäuses über Rastnasen 6, die in Figur 2 dargestellt sind, gehalten. Vorzugsweise kann das Gehäuse 1 zusätzlich noch eine Dichtungsnut 7 bilden, der das Versteifungselement 5 außen umgreift, und somit einen besseren statischen Kraftschluß zwischen Versteifungselement und Gehäuse bewirkt.

Figur 2 zeigt in Frontansicht bei geöffneten Gehäuse die Anordnung des Versteifungsrahmens 5 sowie der Dichtung 3 am Gehäuse 1. Der Versteifungsrahmen wird über Rastnasen 6 gehalten, welche vorzugsweise einstückig am Gehäuse 1 angebracht sind. Um eine optimale mechanische Sicherung des Versteifungsrahmens zu geben, ist an jeder Seite des Gehäuses im Bereich des Versteifungsrahmens eine solche Rastnase vorgesehen. Zum Erhalt eines entsprechenden statischen Kraftschlusses zwischen Versteifungsrahmen 5 und Gehäuse 1, ist am Gehäuse eine Dichtungnut 7 angeformt, so daß der Versteifungsrahmen auf jeweils voller Kantenlänge jeder Seite des Gehäuses eingreift.

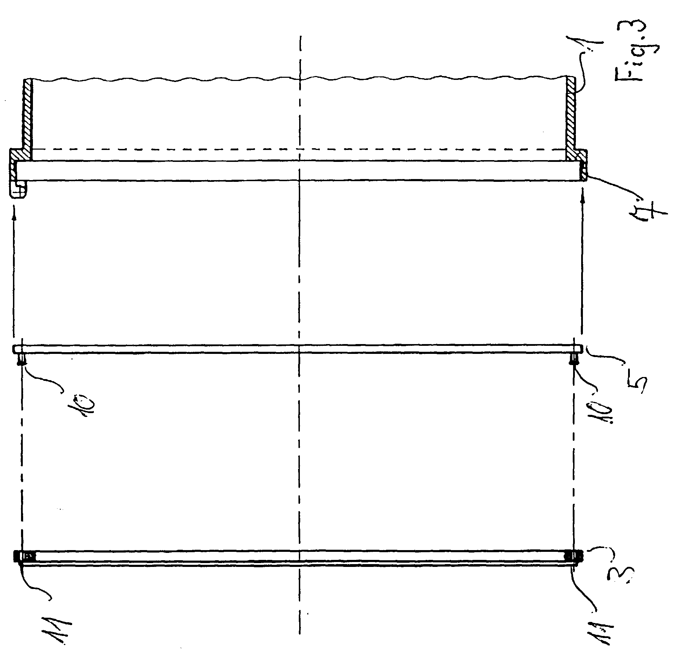

Figur 3 zeigt nochmals in Seitenansicht die Anordnung der einzelnen Elemente wie Dichtung 3, Versteifungsrahmen 5, sowie Gehäuse 1 in der funktionalen Zusammenführung aller Einzelelemente. Hierbei ist ein weiteres Detail dargestellt, welches in wesentlicher und vorteilhafter Ausgestaltung der Erfindung die Dichtung 3 auf dem Versteifungsrahmen sichert. Es sind in jeder Ecke des Versteifungsrahmens Stifte 10 vorgesehen, die konisch angeformt sind. Die Dichtung weist an den entsprechenden Stellen Löcher 11 auf, so daß die Dichtung bei Auflage auf den Versteifungsrahmen über diese Stifte geschoben werden kann. Zur ortsmäßigen Fixierung der Dichtung auf dem Versteifungsrahmen ist der Konus an Stiften so orientiert, daß die Stifte an der Spitze den größeren Durchmesser und in der Nähe des Versteifungsrahmens den kleineren Durchmesser aufweisen. Das heißt bei Aufdrücken der Dichtung muß unter Aufbringung von Lochreibungskräften die Dichtung mit den entsprechenden Öffnungen über die Stifte gedrückt werden, wobei bei weiterem Aufdrücken die Dichtung dann durch Verjüngung des Durchmessers der Stifte in ihre Sollage rutscht. Es wäre auch möglich, die beschriebene konische Konturierung durch die Anformung eines Wulstes an der Spitze des Stiftes wirkungsgleich zu ersetzen. Ein ungewolltes Lösen der Dichtung vom Versteifungsrahmen ist somit sicher vermieden. Als Dichtungsmaterial kann beispielsweise Moosgummi verwendet werden. Dabei ist die Ausgestaltung der Dichtung als Flachdichtung besonders einfach herstellbar.

## Patentansprüche

1. Prozeßschreibergehäuse (1), in welchem die Komponenten eines Prozeßschreibers, welche im wesentlichen aus Aufzeichnungssystem, Leiterplatten, Signalaufbereitung, sowie Schreibtischanordnung bestehen, angeordnet sind, wobei das Gehäuse über eine Fronttür (2) verschließbar ist, und zwischen Gehäuse (1) und Fronttür (2) in einer Dichtungsnut (7) eine Dichtung vorhanden ist,
dadurch gekennzeichnet,
daß das Gehäuse (1) selbsttragend ausgebildet ist und daß dazu in der Dichtungsnut (7) im Bereich der Fronttür des Gehäuses ein Versteifungsrahmen (5) eingelegt ist und daß die Dichtung (3) mit dem Versteifungsrahmen lösbar verbunden ist.

2. Prozeßschreibergehäuse nach Anspruch 1,
dadurch gekennzeichnet,
daß der Versteifungsrahmen (5) in der Dichtungsnut (7) des Gehäuses (1) über einstückig am Gehäuse (1) angeformte Rastnasen (6) gehalten ist.

3. Prozeßschreibergehäuse nach Anspruch 2,
dadurch gekennzeichnet,
daß die Dichtung (3) eine rahmenartige Flachdichtung ist.

4. Prozeßschreibergehäuse nach Anspruch 3,
dadurch gekennzeichnet,
daß der Versteifungsrahmen (5) vorzugsweise in den Ecken mit Stiften (10) versehen ist, und die Dichtung (3) an den entsprechenden Stellen mit Öffnungen (11) versehen ist, so daß die Dichtung (3) auf den Versteifungsrahmen (5) steckbar und fixierbar ist.

5. Prozeßschreibergehäuse nach Anspruch 4,
dadurch gekennzeichnet,
daß die Stifte (10) des Versteifungsrahmens (5) zur Aufnahme der Dichtung (3) konisch ausgebildet sind.

## Claims

1. Process-recorder housing (1), in which there are arranged the components of a process-recorder which essentially comprises a recording system, printed circuit boards, signal-conditioning means and desktop arrangement, it being possible for the housing to be closed off via a front door (2), and a seal being provided in a sealing groove (7) between the housing (1) and front door (2), characterized in that the housing (1) is of self-supporting design, and in that, for this purpose, a stiffening frame (5) is positioned in the sealing groove (7), in the region of the front door of the housing, and in that the seal (3) is connected releasably to the stiffening frame.

2. Process-recorder housing according to Claim 1, characterized in that the stiffening frame (5) is retained in the sealing groove (7) of the housing (1) via latching noses (6) which are integrally formed on the housing (1).

3. Process-recorder housing according to Claim 2, characterized in that the seal (3) is a frame-like flat seal.

4. Process-recorder housing according to Claim 3, characterized in that the stiffening frame (5) is provided, preferably in the corners, with pins (10), and the seal (3) is provided, at corresponding locations, with openings (11), with the result that the seal (3) can be fitted onto the stiffening frame (5) and fixed.

5. Process-recorder housing according to Claim 4, characterized in that, for the purpose of receiving the seal (3), the pins (10) of the stiffening frame (5) are of conical design.

## Revendications

1. Boîtier d'enregistreur de procédé (1), dans lequel sont disposés les composants d'un enregistreur de procédé, qui se composent essentiellement d'un système d'enregistrement, de plaquettes de circuits imprimés, d'une régénération du signal ainsi que d'un agencement d'une table de traçage, le boîtier pouvant être fermé par une porte frontale (2), et dans lequel un joint d'étanchéité est monté entre le boîtier (1) et la porte frontale (2), dans une rainure d'étanchéité (7), caractérisé en ce que le boîtier (1) est autoportant, en ce qu'un cadre raidisseur (5) est placé à cet effet dans la rainure d'étanchéité (7), dans la région de la porte frontale du boîtier, et en ce que le joint d'étanchéité (3) est assemblé de façon séparable au cadre raidisseur.

2. Boîtier d'enregistreur de procédé suivant la revendication 1, caractérisé en ce que le cadre raidisseur (5) est maintenu dans la rainure d'étanchéité (7) du boîtier (1) par des ergots (6) formés d'une pièce avec le boîtier (1).

3. Boîtier d'enregistreur de procédé suivant la revendication 2, caractérisé en ce que le joint d'étanchéité (3) est un joint plat en forme de cadre.

4. Boîtier d'enregistreur de procédé suivant la revendication 3, caractérisé en ce que le cadre raidisseur (5) est de préférence pourvu de broches (10) dans les angles et en ce que le joint d'étanchéité (3) est pourvu d'ouvertures (11) aux endroits correspondants, de telle façon que le joint d'étanchéité (3) puisse être engagé et fixé sur le cadre raidisseur (5).

5. Boîtier d'enregistreur de procédé suivant la revendication 4, caractérisé en ce que les broches (10) du cadre raidisseur (5) sont coniques pour recevoir le joint d'étanchéité (3).
